# EUROPÄISCHE PATENTSCHRIFT

(11) **EP 3 568 228 B1**
(45) Veröffentlichungstag und Bekanntmachung des Hinweises auf die Patenterteilung: **29.12.2021**
(21) Anmeldenummer: 17703035.0
(22) Anmeldetag: 13.01.2017
(51) Int. Cl.: B01D 61/08, B01D 61/12, C02F 1/44

(54) **VORRICHTUNG UND VERFAHREN ZUR AUFBEREITUNG VON SALZHALTIGEM WASSER MITTELS UMKEHROSMOSE**
DEVICE AND METHOD FOR PREPARING SALT-CONTAINING WATER BY MEANS OF REVERSE OSMOSIS
PROCÉDÉ ET DISPOSITIF PERMETTANT DE TRAITER DE L'EAU SALÉE PAR OSMOSE INVERSE

(43) Veröffentlichungstag der Anmeldung: 20.11.2019
(73) Patentinhaber: BWT Aqua AG, 4147 Aesch (CH)
(72) Erfinder: SCHWAIGER, Mathias, 5221 Lochen am See (AT); JOHANN, Jürgen, 69226 Nussloch (DE); FINK, Marc, 79540 Lörrach (DE)
(74) Vertreter: Patentanwaltskanzlei Cartagena
(86) Internationale Anmeldenummer: PCT/EP2017/050708
(87) Internationale Veröffentlichungsnummer: WO 2018/130303

(56) Entgegenhaltungen:
- EP-A1- 2 639 203
- WO-A1-2015/038719
- WO-A2-2009/036717
- JP-A- 2008 068 243
- US-A- 4 476 015
- US-A- 4 741 823
- US-A1- 2012 234 770
- US-A1- 2014 262 989
- US-B1- 6 436 282

## Beschreibung

Die vorliegende Erfindung betrifft eine Vorrichtung und ein Verfahren zur Aufbereitung von salzhaltigem Wasser mittels Umkehrosmose, bei der das Wasser in einen Permeat- und einen Konzentratstrom aufgetrennt wird.

In vielen Bereichen der Industrie sowie in zahlreichen gewerblichen Bereichen wird entsalztes Wasser benötigt, beispielsweise in Kraftwerken zur Herstellung von Dampf, in Backöfen zum Beschwaden des Backraums, in Klimaanlagen zur Verdunstungskühlung und in gewerblichen Spülmaschinen zur Vermeidung von Kalkablagerungen auf dem Spülgut.

Technisch wird entsalztes Wasser meist mittels Umkehrosmose hergestellt. Bei der Umkehrosmose handelt es sich um ein Membrantrennverfahren, bei dem ein salzhaltiger Rohwasserstrom, oft auch als Feedstrom bezeichnet, unter Druck an einer semipermeablen Membran entlang geführt wird. Der Druck wird meist mittels einer Pumpe, der sogenannten Feedpumpe, erzeugt. Ein Teil des Wassers durchdringt die Membran, wohingegen ein großer Teil der im Wasser gelösten Salze von der Membran zurückgehalten werden. Das durch die Umkehrosmose entsalzte Wasser wird als Permeat bezeichnet. Das salzhaltige Restwasser bezeichnet man als Konzentrat.

Die Umkehrosmose liefert in der Regel ein Permeat mit einer elektrischen Leitfähigkeit im Bereich von 5 µS/cm bis 50 µS/cm. Je nach verwendetem Membrantyp und in Abhängigkeit der Parameter (Druck, Temperatur), bei denen das Verfahren durchgeführt wird, erhält man mehr oder weniger salzfreies Permeat.

Herkömmliche Vorrichtungen zur Durchführung von Umkehrosmose benötigen neben einer Feedpumpe häufig auch eine Steuerung zur automatisierten Durchführung von Rückspülvorgängen. Um Fouling- und Scaling-Vorgängen vorzubeugen, müssen darüber hinaus häufig technisch aufwändige Maßnahmen, beispielsweise der Zusatz komplexbildender Chemikalien oder andere Vorbehandlungsschritte, durchgeführt werden. Der Einsatz von Umkehrosmosevorrichtungen in Privathaushalten war aus diesen Gründen bislang eher die Ausnahme als die Regel.

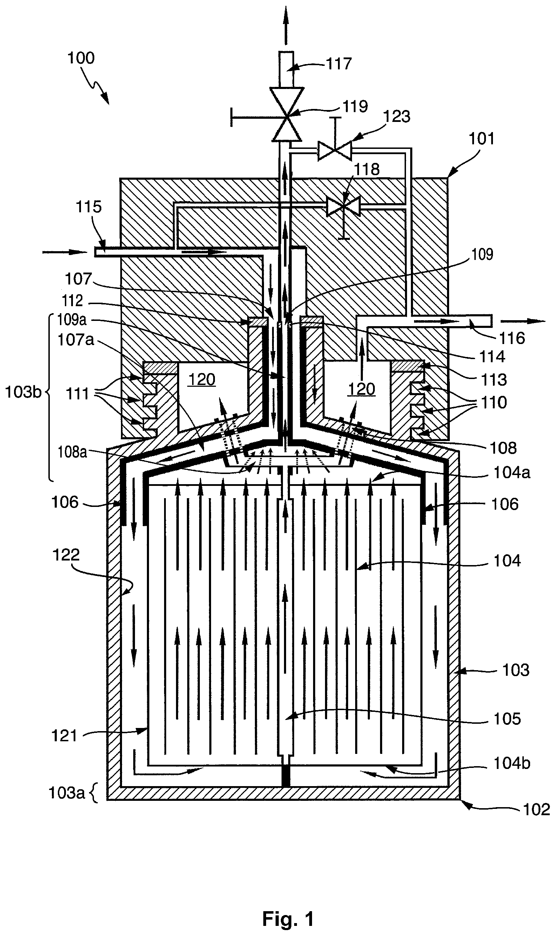

Aus Figur 1 der US 6436282 B1 ist eine Wechselkartusche bekannt, die eine Umkehrosmosemembran enthält. Diese kann lösbar an ein Gehäuse gekoppelt werden, das einen Einlass für Rohwasser, einen Auslass für Permeat und einen Auslass für Konzentrat aufweist.

Aus der WO 2009/036717 A2 ist ein Filtermodul mit einem Druckrohr und einer darin angeordneten Umkehrosmose-Membran bekannt. Das Filtermodul weist Anschlüsse für ein zuzuführendes Fluid, vorzugsweise Rohwasser, und für abfließendes Filtrat und Retentat, auf. Es zeichnet sich durch eine Funktions-/Anschlusseinheit, die in einem Ende des Druckrohres befestigt ist und ein Oberteil und ein Unterteil auf.

Aus der US 4476015 A ist eine Trennvorrichtung bekannt, die mehrere über eine Basis verbundene Spiralwickel-Umkehrosmose-Module umfasst.

Aus der US 4741823 A ist ein Umkehrosmosesystem bekannt, das sich durch einen besonders ausgestalteten Durchflussregelungs-Verteilerblock auszeichnet. Dem Umkehrosmosesystem ist ein Filter vorgeschaltet, der Partikel mit einer Größe ab 5 µm aus dem Rohwasser herausfiltert.

Aus der EP 2 639 203 A1 ist eine Membrantrennvorrichtung mit einer Regelvorrichtung bekannt. Die Vorrichtung trennt eine Zulaufflüssigkeit in einen ersten Teilstrom (Permeat) und einen zweiten Teilstrom (Konzentrat) und zeichnet sich dadurch aus, dass eine Durchflussmenge des ersten Teilstroms (Permeat) zur Regulierung einer Durchflussmenge des zweiten Teilstroms (Konzentrat) und/oder einer Ausbeute des zweiten Teilstroms unter Kompensation äußerer Einflüsse variiert wird.

Aus der JP 2008-68243 A ist eine Wasseraufreinigungsanlage bekannt, die eine Umkehrosmoseeinrichtung umfasst. Über einen Bypass kann aus der Umkehrosmoseeinrichtung austretendes Permeat mit Rohwasser aus dem Zulauf der Umkehrosmoseeinrichtung gemischt werden.

Aus der US 2014/0262989 A1 ist ein Wasseraufbereitungssystem bekannt, das eine Umkehrosmoseeinrichtung umfasst. Beschrieben wird hier eine automatisierte Bypassregellung.

Der vorliegenden Erfindung lag die Aufgabe zugrunde, eine universell einsetzbare Lösung zur Aufbereitung von salzhaltigem Wasser, insbesondere von Leitungswasser, bereitzustellen. Die Lösung sollte sich sowohl in der Industrie und im Gewerbe als auch in Privathaushalten einsetzen lassen und auf dem Prinzip der Umkehrosmose basieren. Mit der Lösung soll sich eine Reduzierung des Salzgehalts des aufzubereitenden Wassers von mehr als 90 % erreichen lassen.

In bevorzugten Ausführungsformen sollte die Lösung darüber hinaus eine Variation der Qualität des aufbereiteten Wassers gestatten.

Diese Aufgabe wird gelöst durch die Vorrichtung mit den Merkmalen des Anspruchs 1 und das Verfahren mit den Merkmalen des Anspruchs 13. Bevorzugte Ausführungsformen der erfindungsgemäßen Vorrichtung sind in den abhängigen Ansprüchen 2 bis 12 angegeben. Der Wortlaut sämtlicher Ansprüche wird hiermit durch Bezugnahme zum Inhalt dieser Beschreibung gemacht.

Wie alle gattungsgemäßen Vorrichtungen zur Aufbereitung von salzhaltigem Wasser unter Auftrennung des Wassers in einen Permeat- und einen Konzentratstrom zeichnet sich die erfindungsgemäße Vorrichtung durch die folgenden Merkmale aus:
- sie umfasst einen Einlass für das aufzubereitende salzhaltige Wasser,
- sie umfasst einen Auslass für das Permeat,
- sie umfasst einen Auslass für das Konzentrat und
- sie umfasst eine Umkehrosmoseeinrichtung,

Besonders dient die erfindungsgemäße Vorrichtung zur Aufbereitung von Leitungswasser.

Die erfindungsgemäße Vorrichtung zeichnet sich besonders dadurch aus, dass
- der Einlass und die Auslässe in eine ortsfest installierbare Basiseinheit integriert sind und
- die Umkehrosmoseeinrichtung als Wechseleinheit vorliegt, welche lösbar mit der Basiseinheit verbunden ist.

Eine solche Vorrichtung kann nicht nur Anwendung im industriellen und gewerblichen Bereich finden sondern insbesondere auch in Privathaushalten, beispielsweise bei der Kaffeewasseraufbereitung oder zur Bereitstellung von Wasser für Heißluftdämpfer. Ihre besondere Eignung hierfür speist sich aus ihrem einfachen Aufbau in Verbindung mit der wechselbaren Umkehrosmoseeinrichtung. Natürlich unterliegt auch die Membran einer erfindungsgemäß zum Einsatz kommenden Umkehrosmoseeinrichtung Fouling- und Scaling-Vorgängen. Aufwendige Wartungsmechanismen sind jedoch nicht erforderlich. Wenn eine Membran der als Wechseleinheit vorliegenden Umkehrosmoseeinrichtung durch Fouling- und Scaling-Vorgänge zu stark belastet ist, wird die Umkehrosmoseeinrichtung einfach ausgetauscht. Der Wechselvorgang ist aufgrund der Modularität der erfindungsgemäßen Vorrichtung dabei denkbar einfach. Vor der ersten Inbetriebnahme der erfindungsgemäßen Vorrichtung wird die Basiseinheit installiert, beispielsweise fest in eine Trinkwasserleitung verbaut. Von einem späteren Wechsel der Umkehrosmoseeinrichtung wird die Basiseinheit dann nicht mehr tangiert. Der Wechsel kann entsprechend problemlos auch von Nicht-Fachleuten vorgenommen werden.

Um eine einfache Installation der Basiseinheit zu ermöglichen, weist die Basiseinheit bevorzugt eine Halterung mit mindestens einer, bevorzugt mit zwei oder mehr Bohrungen, oder aber einen Sitz für eine solche Halterung auf.

Um einen einfachen Austausch der Umkehrosmoseeinrichtung zu ermöglichen, weist die ortsfest installierbare Basiseinheit in bevorzugten Ausführungsformen eine Aufnahme für die Wechseleinheit auf, vorzugsweise eine Aufnahme, in welche die Wechseleinheit eingeschraubt werden kann. Bevorzugt weist die Aufnahme ein Innengewinde auf und die Wechseleinheit ein hierzu passendes Außengewinde.

Natürlich kommen auch andere technische Möglichkeiten zum lösbaren Verbinden der Basiseinheit und der Wechseleinheit in Frage, beispielsweise eine Schnappverbindung.

Die Wechseleinheit zeichnet sich durch die folgenden Merkmale aus:
- Sie umfasst einen Druckbehälter als Teil der Umkehrosmoseeinrichtung.
- Der Druckbehälter umfasst ein Kopfteil, in das eine Eintrittsöffnung für das salzhaltige Wasser, eine Austrittsöffnung für das Permeat und eine Austrittsöffnung für das Konzentrat integriert sind.

Erfindungsgemäß sind hierbei das Kopfteil und die Basiseinheit derart ausgebildet, dass die Eintrittsöffnung mit dem Einlass für das salzhaltige Wasser und die Austrittsöffnungen mit den Auslässen für das Permeat und das Konzentrat gekoppelt sind, wenn die Umkehrosmoseeinrichtung mit der Basiseinheit verbunden ist. Das aufzubereitende salzhaltige Wasser tritt dann also über den Einlass in die Basiseinheit ein und wird über die Eintrittsöffnung in die Umkehrosmoseeinrichtung eingespeist. In der Umkehrosmoseeinrichtung gebildetes Permeat und Konzentrat verlassen diese über die jeweiligen Austrittsöffnungen und treten nach Durchlaufen der Basiseinheit über die Auslässe für das Permeat und das Konzentrat aus dieser aus.

Der Druckbehälter ist besonders bevorzugt zylindrisch ausgebildet und weist einen Boden und das Kopfteil auf. In bevorzugten Ausführungsformen ist der Boden des Druckbehälters geschlossen.

Die verwendete Umkehrosmoseeinrichtung ist bevorzugt eine solche mit Wickelaufbau. Sie weist bevorzugt eine Umkehrosmosemembran auf, die um ein perforiertes Rohr gewickelt ist, das zum Sammeln und Abführen des Permeats (kurz: Permeatsammelrohr) dient. Bei solchen Umkehrosmoseeinrichtungen ist in bevorzugten Ausführungsformen eine beidseitig verklebte oder verschweißte Membrantasche an ihrem offenen Ende mit dem Permeatsammelrohr verbunden und um das Rohr aufgewickelt. Abstandshaltermatter sowohl innerhalb der Membrantasche als auch zwischen den aufgewickelten Lagen der Membrantasche ermöglichen auf der Permeat- und auf der Konzentratseite das Zu- und Abführen von Wasser.

Besonders bevorzugt liegt die Membran in Form eines zylindrischen Wickels vor, der zwei stirnseitige Enden, im Folgenden auch als erste und zweite Stirnseite bezeichnet, aufweist. Innerhalb des Druckbehälters ist dieser Wickel bevorzugt derart angeordnet, dass die erste Stirnseite in Richtung des Kopfteils und die zweite Stirnseite in Richtung des Bodens weist.

Auf die erste Stirnseite der gewickelten Umkehrosmosemembran ist in bevorzugten Ausführungsformen ein Adapter aufgebracht, über den die Umkehrosmosemembran samt dem Permeatsammelrohr mit dem Kopfteil des Druckbehälters gekoppelt ist. Der Adapter kann ein- oder mehrteilig ausgeführt sein.

Es ist bevorzugt, dass über den Adapter die erste Stirnseite der gewickelten Umkehrosmosemembran mit der Eintrittsöffnung für das salzhaltige Wasser im Kopfteil des Druckbehälters gekoppelt ist. In die Umkehrosmoseeinrichtung eintretendes salzhaltiges Wasser kann somit die erste Stirnseite anströmen. Von dort aus durchströmt es den Wickel axial in Richtung der zweiten Stirnseite. Hierbei kommt es zu der eingangs erwähnten Auftrennung in das Permeat und das Konzentrat. Während sich das Permeat in das Permeatsammelrohr eintritt und über dieses abgeführt wird, tritt das Konzentrat aus der zweiten Stirnseite des zylindrischen Wickels aus.

Es ist weiterhin bevorzugt, dass über den Adapter die zweite Stirnseite der gewickelten Umkehrosmosemembran mit der Austrittsöffnung für das Konzentrat gekoppelt ist. Der Adapter stellt hierfür einen geeigneten Austrittskanal bereit, über den aus der zweiten Stirnseite austretendes Konzentrat der Austrittsöffnung zugeführt wird. Somit kann aus der zweiten Stirnseite austretendes Konzentrat über diese Austrittsöffnung die Umkehrosmoseeinrichtung in Richtung des im Basisteil integrierten Auslasses für das Konzentrat verlassen. Beispielsweise kann das Konzentrat hierzu über eine Leitung oder einen Spalt zwischen dem Mantel des zylindrischen Wickels und einer Innenwand des Druckbehälters einem entsprechenden Zulauf im Adapter zugeführt werden, der in die Austrittsöffnung für das Konzentrat mündet.

In einer alternativen, besonders bevorzugten Ausführungsform kann die Eintrittsöffnung für das salzhaltige Wasser im Kopfteil des Druckbehälters über den Adapter auch mit der zweiten Stirnseite der gewickelten Umkehrosmosemembran gekoppelt sein. Hierzu kann das salzhaltige Wasser über eine Leitung oder einen Spalt zwischen dem Mantel des zylindrischen Wickels und einer Innenwand des Druckbehälters der zweiten Stirnseite zugeführt werden. In die Umkehrosmoseeinrichtung eintretendes salzhaltiges Wasser kann somit die zweite Stirnseite anströmen. Von dort aus durchströmt es den Wickel axial in Richtung der ersten Stirnseite. Hierbei kommt es zu der eingangs erwähnten Auftrennung in das Permeat und das Konzentrat. Während sich das Permeat in das Permeatsammelrohr eintritt und über dieses abgeführt wird, tritt das Konzentrat aus der ersten Stirnseite des zylindrischen Wickels aus.

In dieser alternativen Ausführungsform ist es weiterhin bevorzugt, dass über den Adapter die erste Stirnseite der gewickelten Umkehrosmosemembran mit der Austrittsöffnung für das Konzentrat gekoppelt ist. Der Adapter stellt hierfür einen geeigneten Austrittskanal bereit, über den aus der ersten Stirnseite austretendes Konzentrat der Austrittsöffnung zugeführt wird. Somit kann aus der ersten Stirnseite austretendes Konzentrat über diese Austrittsöffnung die Umkehrosmoseeinrichtung in Richtung des im Basisteil integrierten Auslasses für das Konzentrat verlassen.

Es ist weiterhin bevorzugt, dass über den Adapter das Permeatsammelrohr mit der Austrittsöffnung für das Permeat im Kopfteil des Druckbehälters gekoppelt ist. Der Adapter stellt hierfür einen geeigneten Austrittskanal bereit, der das Permeatsammelrohr mit der Austrittsöffnung verbindet. Somit kann in das Permeatsammelrohr eintretendes Permeat über diese Austrittsöffnung die Umkehrosmoseeinrichtung in Richtung des im Basisteil integrierten Auslasses für das Permeat verlassen.

Erfindungsgemäß umfasst die Vorrichtung, insbesondere die ortsfest installierbare Basiseinheit, eine Verschneideeinrichtung, mit der aus der Umkehrosmoseeinrichtung austretendes Permeat mit dem salzhaltigen Wasser, insbesondere mit dem Leitungswasser, und/oder mit dem Konzentrat versetzt werden kann, besonders bevorzugt in einem regelbaren Mischverhältnis versetzt werden kann.

Die Verschneideeinrichtung kann beispielsweise einen ventilgesteuerten Durchlass in einer den Einlass für das salzhaltige Wasser und den Permeatauslass verbindenden Leitung innerhalb des Basisteils umfassen.

Erfindungsgemäß ist die Verschneideeinrichtung als Ventil ausgebildet.

Die Verschneideeinrichtung umfasst einen von einer Wand begrenzten Kanal. Die Wand des Kanals weist bevorzugt mindestens eine Durchbrechung auf, durch welche Flüssigkeit in den Kanal eindringen kann.

Besonders bevorzugt weist die Wand mehrere, insbesondere zwei bis fünf, Durchbrechungen auf. Diese können jeweils den gleichen Querschnitt aufweisen. In einigen Ausführungsformen können die Querschnitte der Durchbrechungen aber auch voneinander abweichen. Weiterhin ist es bevorzugt, dass die Durchbrechungen in der Wand entlang einer axial ausgerichteten Linie angeordnet sind, bevorzugt in regelmäßigen Abständen.

Bei den Durchbrechungen kann es sich beispielsweise um Bohrungen oder um Schlitze handeln.

Bei der Flüssigkeit handelt es sich insbesondere um salzhaltiges Wasser, das von dem über den erwähnten Einlass in die erfindungsgemäße Vorrichtung eingeströmten Wasser abgezweigt wird, bevor dieses über die gleichfalls bereits erwähnte Eintrittsöffnung in die Umkehrosmoseeinrichtung eingespeist wird.

Der Kanal ist bevorzugt zumindest bereichsweise, besonders bevorzugt über seine gesamte Länge, rotationssymmetrisch, insbesondere zylindrisch, ausgebildet.

Die Verschneideeinrichtung umfasst weiterhin einen Ventilkörper, der innerhalb des Kanals axial verschiebbar und/oder rotativ beweglich gelagert ist.

Vorzugsweise weist der Ventilkörper einen Dichtungsbereich auf, der in Abhängigkeit der Position des Ventilkörpers den Durchfluss von Flüssigkeit durch die mindestens eine Durchbrechung vollständig oder teilweise sperren kann. Der Dichtungsbereich kann zu diesem Zweck beispielsweise zwei voneinander beabstandete O-Dichtungsringe umfassen, die jeweils flüssigkeitsdicht an der Wand des Kanals anliegen. Ist der Ventilkörper derart in dem Kanal positioniert, dass die mindestens eine Durchbrechung zwischen den beiden O-Dichtungsringen in den Kanal münden, so ist der Durchfluss von Flüssigkeit durch die mindestens eine Durchbrechung gesperrt. Liegen in Folge einer axialen Verschiebung des Ventilkörpers eine oder mehrere der Durchbrechungen in einem Kanalabschnitt ober- oder unterhalb der beiden O-Dichtungsringe, so ist der Durchfluss eingeschränkt oder vollständig frei.

Erfindungsgemäß ist die Verschneideeinrichtung an einer Grenzfläche zwischen der Basiseinheit und der Wechseleinheit ausgebildet. In dieser Ausführungsform ist der Ventilkörper bevorzugt Bestandteil der Basiseinheit. Der Kanal samt der den Kanal begrenzenden Wand ist bevorzugt Bestandteil der Wechseleinheit. Bei jedem Austausch der Umkehrosmoseeinrichtung wird somit der Ventilkörper in den Kanal eingeschoben.

Der Kanal weist bevorzugt einen Eingang auf, der mit dem Permeatsammelrohr gekoppelt ist, sowie einen Ausgang, der mit dem Auslass für das Permeat gekoppelt ist. Mit anderen Worten, der Kanal wird bevorzugt von Permeat durchflossen. Noch weiter bevorzugt wird das Permeat in dem Kanal mit durch die mindestens eine Durchbrechung in den Kanal eintretendem salzhaltigem Wasser gemischt.

In weiteren bevorzugten Ausführungsformen kann der Ventilkörper hohlzylindrisch ausgebildet sein. In diesen Ausführungsformen weist er einen zentralen Durchgang mit einem Eingang an einem Ende des Ventilkörpers und einem Ausgang am anderen Ende des Ventilkörpers auf. Es ist bevorzugt, dass der Ausgang des zentralen Durchgangs mit dem in die Basiseinheit integrierten Auslass für das Konzentrat gekoppelt ist. Alternativ kann es sich bei dem Ausgang des zentralen Durchgangs auch um den in die Basiseinheit integrierten Auslass für das Konzentrat handeln. Der Eingang des zentralen Durchgangs ist bevorzugt mit der Austrittsöffnung für das Konzentrat gekoppelt, insbesondere in diese eingeschoben. Mit anderen Worten, der Ventilkörper wird in diesen Ausführungsformen bevorzugt von Konzentrat durchflossen.

Es ist bevorzugt, dass die Position des Ventilkörpers innerhalb des Kanals mittels eines Positionierelements einstellbar ist, welches eine axiale Verschiebung des Ventilkörpers innerhalb des Kanals bewirkt.

In einer bevorzugten Ausführungsform sitzt das Positionierelement drehbar auf einem Gewinde auf und erfährt bei einer Drehung eine Verschiebung in axialer Richtung. Besonders bevorzugt ist das Positionierelement hierbei mit dem Ventilkörper derart gekoppelt, dass eine Verschiebung des Positionierelements in axialer Richtung eine Axialverschiebung des Ventilkörpers bewirkt.

Besonders bevorzugt ist das Positionierelement als drehbare Kappe ausgebildet.

In einer alternativen Ausführungsform ist die Position des Ventilkörpers innerhalb des Kanals ist mittels eines Positionierelements einstellbar, welches eine Rotation des Ventilkörpers innerhalb des Kanals bewirkt. Besonders bevorzugt ist das Positionierelement drehfest mit dem Ventilkörper verbunden.

Wenn die Verschneideeinrichtung dazu ausgebildet ist, aus der Umkehrosmoseeinrichtung austretendes Permeat mit dem Konzentrat zu versetzen, so handelt es sich bei dieser Verschneideeinrichtung insbesondere um einen ventilgesteuerten Durchlass in einer den Konzentratauslass und den Permeatauslass verbindenden Leitung innerhalb des Basisteils.

In weiteren bevorzugten Ausführungsformen umfasst die erfindungsgemäße Vorrichtung, insbesondere die ortsfest installierbare Basiseinheit, eine Regelvorrichtung zur Steuerung und/oder Regelung einer Durchflussmenge des aus der Umkehrosmoseeinrichtung austretenden Permeats und/oder Konzentrats. Besonders bevorzugt wird zur Steuerung und/oder Regelung der Durchflussmenge des aus der Umkehrosmoseeinrichtung austretenden Permeats die Durchflussmenge des Konzentrats variiert. Wird die Durchflussmenge des Konzentrats verringert, so führt dies in der Regel automatisch zu einer Erhöhung der Permeatmenge, die durch den Auslass für das Permeat fließt. Bei der Regelvorrichtung kann es sich insbesondere um ein manuell betätigbares oder automatisiert ansteuerbares Ventil handeln.

Von der vorliegenden Erfindung umfasst ist auch jedes Verfahren zur Aufbereitung von salzhaltigem Wasser mittels Umkehrosmose, das unter Verwendung einer erfindungsgemäßen Vorrichtung erfolgt.

Weitere Merkmale und Vorteile der Erfindung ergeben sich aus der nachfolgenden Beschreibung mehrerer bevorzugter Ausführungsformen der erfindungsgemäßen Vorrichtung.

In Fig. 1 findet sich eine schematische Darstellung einer bevorzugten Ausführungsform einer erfindungsgemäßen Vorrichtung 100 Querschnittsdarstellung. Diese umfasst eine ortsfest installierte Basiseinheit 101 und eine Umkehrosmoseeinrichtung als Wechseleinheit 102. Die Umkehrosmoseeinrichtung weist ein Druckgehäuse 103 aus Kunststoff aus, das einen Boden 103a und ein Kopfteil 103b aufweist. In dem Druckgehäuse 103 ist eine Umkehrosmosemembran in Form eines zylindrischen Wickels 104 angeordnet, der eine erste Stirnseite 104a und eine zweite Stirnseite 104b aufweist. Im Zentrum des Wickels befindet sich das Permeatsammelrohr 105.

Der Wickel 104 ist über den Adapter 106 an das Kopfteil 103b gekoppelt. Der Adapter 106 stellt Zugänge und Abgänge für in die Umkehrosmoseeinrichtung 102 eintretendes Wasser sowie aus der Umkehrosmoseeinrichtung 102 austretendes Permeat und Konzentrat bereit, nämlich die Eintrittsöffnung 107, die Austrittsöffnung 108 und die Austrittsöffnung 109. Weiterhin stellt der Adapter den Eintrittskanal 107a und die Austrittskanäle 108a und 109a bereit, von denen der Kanal 108a die Austrittsöffnung 108 mit dem Permeatsammelrohr 105 verbindet, während in der Umkehrosmoseeinrichtung gebildetes Konzentrat über den Austrittskanal 109a der Austrittsöffnung 109 zugeführt wird.

Mit der Basiseinheit 101 ist die Wechseleinheit 102 durch Verschraubung verbunden. Die Basiseinheit 101 weist zu diesem Zweck das Innengewinde 110 auf, die Wechseleinheit 103 das Außengewinde 111. Im Bereich der Austrittsöffnungen 108 und 109 sind zwischen der Basiseinheit 101 und der Wechseleinheit 102 die Dichtungen 112 und 114 positioniert. Eine weitere Dichtung 113 findet sich im Bereich der Gewinde 110 bzw. 111.

Die Basiseinheit 101 umfasst einen Einlass 115 für in der Wechseleinheit 102 aufzubereitendes salzhaltiges Wasser, einen Auslass 116 für in der Wechseleinheit gebildetes Permeat und einen Auslass 117 für in der Wechseleinheit 102 gebildetes Konzentrat. Wenn, wie abgebildet, die Wechseleinheit 102 in die Basiseinheit 101 eingeschraubt ist, so sind der Einlass 115 mit der Eintrittsöffnung 107, der Auslass 116 mit der Austrittsöffnung 108 und der Auslass 117 mit der Austrittsöffnung 109 gekoppelt.

Die Basiseinheit 101 kann weiterhin die Verschneideeinrichtungen 118 und/oder 123 sowie gegebenenfalls die Regelvorrichtung 119 umfassen. Mittels der Verschneideeinrichtung 118 kann aus der Umkehrosmoseeinrichtung 102 austretendes Permeat mit über den Einlass 115 in die Basiseinheit 101 eintretendem, salzhaltigem Wasser gemischt werden. Mittels der Verschneideeinrichtung 123 kann aus der Umkehrosmoseeinrichtung 102 austretendes Permeat mit Konzentrat gemischt werden. Mittels der Regelvorrichtung 119 kann die Durchflussmenge des aus der Umkehrosmoseeinrichtung 102 austretenden Konzentrats und damit indirekt die Permeatbildung in der Umkehrosmoseeinrichtung 102 geregelt werden.

Die Strömungsrichtung des aufzubereitenden Wassers bzw. des entstehenden Permeats und Konzentrats innerhalb der Vorrichtung 100 ist durch Pfeile illustriert. Im Betrieb tritt salzhaltiges Wasser über den Einlass 115 in die Basiseinheit 101 ein. Von da aus wird das Wasser über die Eintrittsöffnung 107 in die Umkehrosmoseeinrichtung 102 eingespeist. In dieser strömt es über den Eintrittskanal 107a sowie über einen Spalt zwischen dem Mantel 121 des zylindrischen Wickels 104 und der Innenwand 122 des Druckbehälters die zweite Stirnseite 104b an und durchströmt dann den Wickel axial in Richtung der ersten Stirnseite 104a, wobei es zur Bildung von Permeat und Konzentrat kommt. Während das Permeat über das Permeatsammelrohr 105 abgeführt wird, tritt das Konzentrat aus der ersten Stirnseite 104a des zylindrischen Wickels 104 aus. Permeat aus dem Permeatsammelrohr 105 kann nach oben durch den Kanal 108a und über die Austrittsöffnung 108 in die Basiseinheit 101 eintreten. Hier gelangt es in einen ringförmigen Hohlraum 120, der von der Basiseinheit 101 und der Wechseleinheit 102 eingeschlossen ist. Von dort wird es dem Auslass 116 zugeführt. Aus der ersten Stirnseite 104a des zylindrischen Wickels 104 austretendes Konzentrat fließt über den Austrittskanal 109a zur Austrittsöffnung 109 und mündet in der Basiseinheit 101. Dort wird es dem Auslass 117 zugeführt. Die Menge des aus dem Auslass 117 austretenden Konzentrats lässt sich mittels der Regelvorrichtung 119, bei der es sich meist um ein Ventil handelt, regeln.

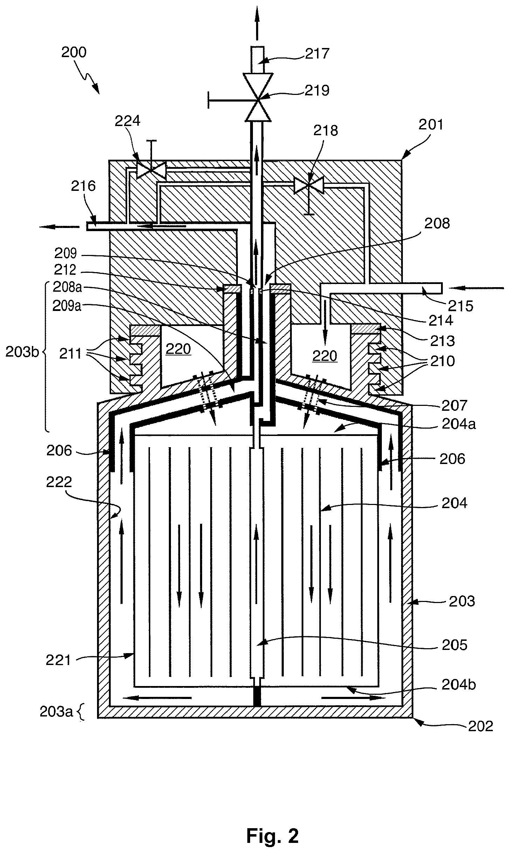

In Fig. 2 findet sich eine schematische Darstellung einer bevorzugten Ausführungsform einer erfindungsgemäßen Vorrichtung 200 Querschnittsdarstellung. Diese umfasst eine ortsfest installierte Basiseinheit 201 und eine Umkehrosmoseeinrichtung als Wechseleinheit 202. Die Umkehrosmoseeinrichtung weist ein Druckgehäuse 203 aus Kunststoff auf, das einen Boden 203a und ein Kopfteil 203b aufweist. In dem Druckgehäuse 203 ist eine Umkehrosmosemembran in Form eines zylindrischen Wickels 204 angeordnet, der eine erste Stirnseite 204a und eine zweite Stirnseite 204b aufweist. Im Zentrum des Wickels befindet sich das Permeatsammelrohr 205.

Der Wickel 204 ist über den Adapter 206 an das Kopfteil 203b gekoppelt. Der Adapter 206 stellt Zugänge und Abgänge für in die Umkehrosmoseeinrichtung 202 eintretendes Wasser sowie aus der Umkehrosmoseeinrichtung 202 austretendes Permeat und Konzentrat bereit, nämlich die Eintrittsöffnung 207, die Austrittsöffnung 208 und die Austrittsöffnung 209. Weiterhin stellt der Adapter die Austrittskanäle 208a und 209a bereit, von denen der Kanal 208a die Austrittsöffnung 208 mit dem Permeatsammelrohr 205 verbindet, während in der Umkehrosmoseeinrichtung gebildetes Konzentrat über den Austrittskanal 209a der Austrittsöffnung 209 zugeführt wird.

Mit der Basiseinheit 201 ist die Wechseleinheit 202 durch Verschraubung verbunden. Die Basiseinheit 201 weist zu diesem Zweck das Innengewinde 210 auf, die Wechseleinheit 203 das Außengewinde 211. Im Bereich der Austrittsöffnungen 208 und 209 sind zwischen der Basiseinheit 201 und der Wechseleinheit 202 die Dichtungen 212 und 214 positioniert. Eine weitere Dichtung 213 findet sich im Bereich der Gewinde 210 bzw. 211.

Die Basiseinheit 201 umfasst einen Einlass 215 für in der Wechseleinheit 202 aufzubereitendes salzhaltiges Wasser, einen Auslass 216 für in der Wechseleinheit gebildetes Permeat und einen Auslass 217 für in der Wechseleinheit 202 gebildetes Konzentrat. Wenn, wie abgebildet, die Wechseleinheit 202 in die Basiseinheit 201 eingeschraubt ist, so sind der Einlass 215 mit der Eintrittsöffnung 207, der Auslass 216 mit der Austrittsöffnung 208 und der Auslass 217 mit der Austrittsöffnung 209 gekoppelt.

Die Basiseinheit 201 kann weiterhin die Verschneideeinrichtungen 218 und/oder 224 sowie gegebenenfalls die Regelvorrichtung 219 umfassen. Mittels der Verschneideeinrichtung 218 kann aus der Umkehrosmoseeinrichtung 202 austretendes Permeat mit über den Einlass 215 in die Basiseinheit 201 eintretendem, salzhaltigem Wasser gemischt werden. Mittels der Verschneideeinrichtung 224 kann aus der Umkehrosmoseeinrichtung 202 austretendes Permeat mit Konzentrat gemischt werden. Mittels der Regelvorrichtung 219 kann die Durchflussmenge des aus der Umkehrosmoseeinrichtung 202 austretenden Konzentrats und damit indirekt die Permeatbildung in der Umkehrosmoseeinrichtung 202 geregelt werden.

Die Strömungsrichtung des aufzubereitenden Wassers bzw. des entstehenden Permeats und Konzentrats innerhalb der Vorrichtung 200 ist durch Pfeile illustriert. Im Betrieb tritt salzhaltiges Wasser über den Einlass 215 in die Basiseinheit 201 und in dieser anschließend in den ringförmigen Hohlraum 220 ein, der von der Basiseinheit 201 und der Wechseleinheit 202 eingeschlossen ist. Von da aus wird das Wasser über die Eintrittsöffnung 207 in die Umkehrosmoseeinrichtung 202 eingespeist. In dieser strömt es die erste Stirnseite 204a an und durchströmt dann den Wickel axial in Richtung der zweiten Stirnseite 204b, wobei es zur Bildung von Permeat und Konzentrat kommt. Während das Permeat über das Permeatsammelrohr 205 abgeführt wird, tritt das Konzentrat aus der zweiten Stirnseite 204b des zylindrischen Wickels 204 aus. Permeat aus dem Permeatsammelrohr 205 kann nach oben durch den Kanal 208a und über die Austrittsöffnung 208 in die Basiseinheit 201 eintreten. In dieser wird es dem Auslass 216 zugeführt. Aus der zweiten Stirnseite 204b des zylindrischen Wickels 204 austretendes Konzentrat tritt über einen Spalt zwischen dem Mantel 221 des zylindrischen Wickels 204 und der Innenwand 222 des Druckbehälters in den Kanal 209a im Adapter 206 ein, der über die Austrittsöffnung 209 in die Basiseinheit 201 mündet. Dort wird es dem Auslass 217 zugeführt. Die Menge des aus dem Auslass 217 austretenden Konzentrats lässt sich mittels der Regelvorrichtung 219 regeln.

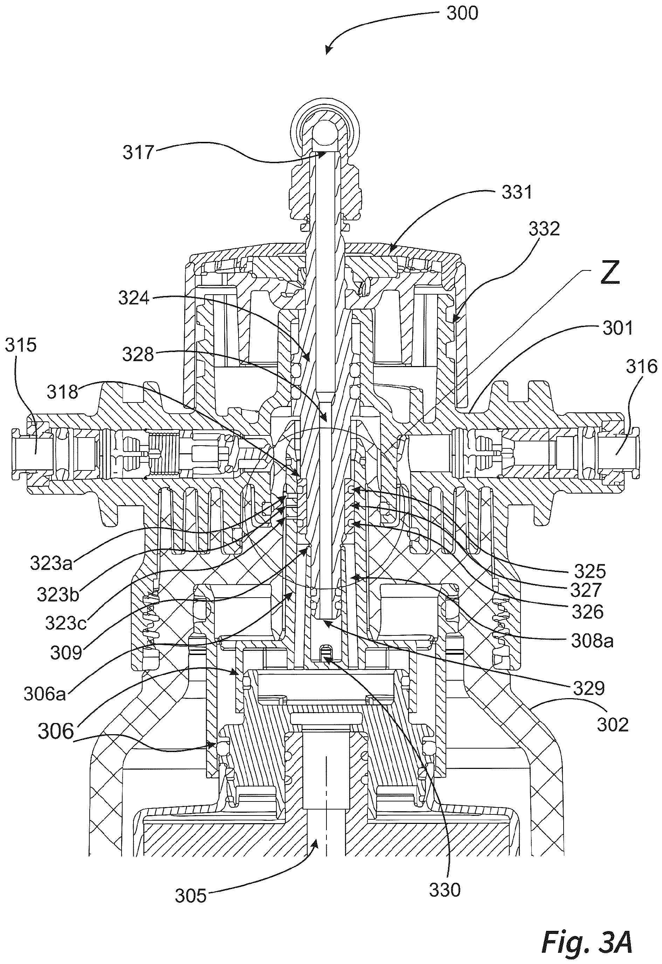

In Fig. 3A findet sich eine schematische Darstellung einer bevorzugten Ausführungsform einer erfindungsgemäßen Vorrichtung 300 Querschnittsdarstellung. Die Darstellung dient vor allem als Beispiel einer erfindungsgemäßen Vorrichtung, die eine Verschneideeinrichtung 318 umfasst, mit der Permeat mit salzhaltigen Wasser versetzt werden kann und die an einer Grenzfläche zwischen der Basiseinheit 301 und der als Wechseleinheit 302 ausgebildeten Umkehrosmoseeinrichtung ausgebildet ist. Von der Wechseleinheit 302 ist daher nur der obere Teil, einschließlich des Adapters 306 dargestellt.

Die dargestellte Basiseinheit 301 umfasst den Einlass 315 für in der Wechseleinheit 302 aufzubereitendes salzhaltiges Wasser, einen Auslass 316 für in der Wechseleinheit gebildetes Permeat und einen Auslass 317 für in der Wechseleinheit 302 gebildetes Konzentrat.

Die Verschneideeinrichtung 318 umfasst den von der Wand 306a begrenzten Kanal 308a. Der Kanal 308a ist samt der den Kanal begrenzenden Wand 306a Bestandteil der Wechseleinheit 302.

Der Kanal 308a wird von in der Wechseleinheit 302 gebildetem Permeat durchflossen. Der Kanal weist hierzu einen Eingang auf, der mit dem Permeatsammelrohr 305 gekoppelt ist, sowie einen Ausgang, der mit dem Auslass 316 für das Permeat gekoppelt ist. Sowohl der Eingang als auch der Ausgang sind in der dargestellten Schnittebene nicht sichtbar, zur Erläuterung der Funktion der Verschneideeinrichtung 318 ist dies aber auch nicht erforderlich.

Wesentlich für die Funktion der Verschneideeinrichtung 318 sind hingegen die Durchbrechungen 323a, 323b und 323c. Durch diese kann über den Einlass 315 in die Basiseinheit 301 eintretendes salzhaltiges Wasser in den Kanal 308a eingespeist und mit Permeat gemischt werden. Der Strömungspfad des salzhaltigen Wassers ausgehend von dem Einlass 315 bis hin zu den Durchbrechungen 323a, 323b und 323c ist in der dargestellten Schnittebene nicht durchgehend sichtbar, auch dies ist zur Erläuterung der Funktion der Verschneideeinrichtung 318 aber nicht erforderlich.

Bei den Durchbrechungen 323b und 323c handelt es sich um Bohrungen mit identischem Querschnitt. Bei der Durchbrechung 323a handelt es sich um einen Schlitz, dessen Querschnitt ein Vielfaches des Querschnitts der Durchbrechungen 323b und 323c beträgt. Die drei Durchbrechungen sind entlang einer axial ausgerichteten Linie angeordnet.

Der von der Wand 306a begrenzte Kanal 308a ist bevorzugt im Wesentlichen über seine gesamte Länge zylindrisch ausgebildet. Innerhalb des Kanals 308a ist der Ventilkörper 324 angeordnet. Dieser ist innerhalb des Kanals 308a axial verschiebbar gelagert.

Der Ventilkörper 324 ist Bestandteil der Basiseinheit.

Der Ventilkörper 324 weist einen von den O-Dichtungsringen 325 und 326 definierten Dichtungsbereich 327 auf, der in Abhängigkeit der Position des Ventilkörpers den Durchfluss von salzhaltigem Wassser durch die Durchbrechungen 323a, 323b und 323c vollständig oder teilweise sperren kann. Die O-Dichtungsringe 325 und 326 liegen jeweils flüssigkeitsdicht an der Wand 306a des Kanals 308a an. Bei der dargestellten Positionierung münden alle drei Durchbrechungen 323a, 323b und 323c innerhalb des Dichtungsbereichs 327 in den Kanal. Der Durchfluss von salzhaltigem Wasser durch die Durchbrechungen 323a, 323b und 323c ist daher gesperrt.

Wird der Ventilkörper 324 in dem Kanal 308a jedoch axial nach oben verschoben, so dass eine oder mehrere der Durchbrechungen 323a, 323b und 323c in einem Kanalabschnitt unterhalb der beiden O-Dichtungsringe 325 und 326 in den Kanal münden, so ist der Durchfluss eingeschränkt oder vollständig frei.

Der dargestellte Ventilkörper 324 ist hohlzylindrisch ausgebildet. Er weist einen zentralen Durchgang 328 mit einem Eingang 329 an einem Ende des Ventilkörpers 324 und einem Ausgang am anderen Ende des Ventilkörpers 324 auf. Bei dem Ausgang des zentralen Durchgangs 328 handelt es sich um den bereits erwähnten Auslass 317 für das Konzentrat. Der Eingang 329 des zentralen Durchgangs 328 ist in die Austrittsöffnung 309 für das Konzentrat eingeschoben. Über den Zulauf 330 wird Konzentrat in den Durchgang 328 eingespeist. Das Konzentrat wird dann durch den Ventilkörper 324 abgeführt.

Die Position des Ventilkörpers 324 ist innerhalb des Kanals 308a mittels des Positionierelements 331 einstellbar, das drehbar auf einem Gewinde 332 aufsitzt. Ein Drehen des Positionierelements 331 führt zwingend auch zu einer axialen Verschiebung des Ventilkörpers 324 innerhalb des Kanals, da das Positionierelement 331 und der Ventilkörper 324 fest miteinander verbunden sind. Vorliegend ist das Positionierelement 331 als drehbare Kappe ausgebildet, die der Oberseite der Basiseinheit 301 Schutz bietet.

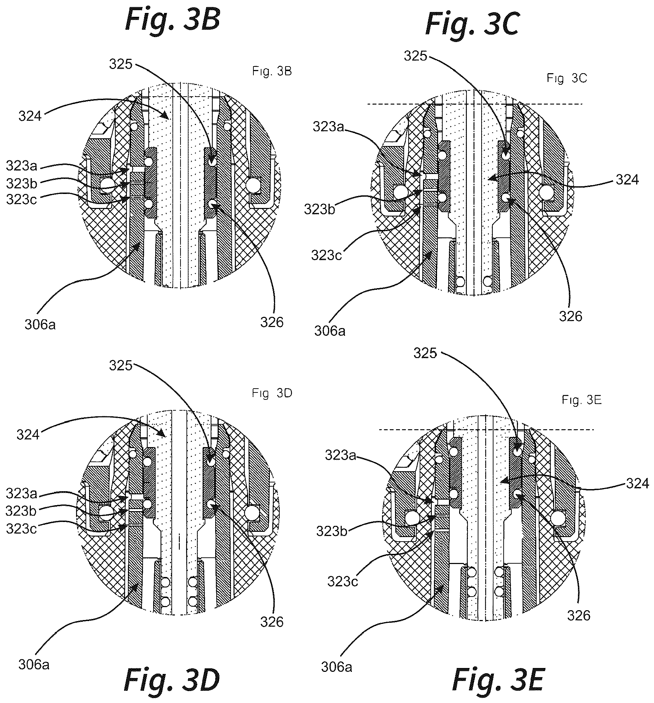

In Fig. 3B ist der Ausschnitt Z aus Fig. 3A vergrößert dargestellt. Der Ventilkörper 324 befindet sich hier in einer Sperrposition.

Fig. 3C zeigt den Ausschnitt Z in Fällen, in denen der Ventilkörper 324 auf teilweisen Durchlass geschaltet ist. Durch die Bohrung 323c kann salzhaltiges Wasser in den Kanal 308a eintreten und sich dort mit Permeat mischen. Das Mischverhältnis wird u.a. durch den Querschnitt der Bohrung 323c bestimmen. Die Bohrung 323b und der Schlitz 323a sind gesperrt.

Fig. 3D zeigt den Ausschnitt Z in weiteren Fällen, in denen der Ventilkörper 324 auf teilweisen Durchlass geschaltet ist. In diesen weiteren Fällen kann salzhaltiges Wasser durch die Bohrungen 323b und 323c in den Kanal 308a eintreten. Der Schlitz 323a ist gesperrt.

Fig. 3E zeigt den Ausschnitt Z in Fällen, in denen der Ventilkörper 324 auf vollständigen Durchlass geschaltet ist. In diesen weiteren Fällen kann salzhaltiges Wasser durch die Bohrungen 323b und 323c und durch den Schlitz 323a in den Kanal 308a eintreten. Sofern die Bohrungen 323b und 323c und der Schlitz 323a einen ausreichend großen Querschnitt aufweisen, kann in den Einlass 315 eintretendes salzhaltiges Wasser auch vollständig an der Umkehrosmoseeinrichtung 302 vorbei geführt werden (Bypass-Schaltung). Dies kann beispielsweise erforderlich sein, wenn die Membran der Umkehrosmoseeinrichtung 302 mit Verunreinigungen zugesetzt ist und blockiert.

## Patentansprüche

1. Vorrichtung (100; 200; 300) zur Aufbereitung von salzhaltigem Wasser mittels Umkehrosmose, bei der das salzhaltige Wasser in einen Permeat- und einen Konzentratstrom aufgetrennt wird, mit den Merkmalen
• Die Vorrichtung umfasst einen Einlass (115; 215; 315) für das salzhaltige Wasser,
• die Vorrichtung umfasst einen Auslass (116; 216; 316) für das Permeat,
• die Vorrichtung umfasst einen Auslass (117; 217; 317) für das Konzentrat und
• die Vorrichtung umfasst eine Umkehrosmoseeinrichtung (102; 202; 302),
und den zusätzlichen Merkmalen dass
• der Einlass und die Auslässe in eine ortsfest installierbare Basiseinheit (101; 201; 301) integriert sind und
• die Umkehrosmoseeinrichtung (102; 202; 302) als Wechseleinheit vorliegt, welche lösbar mit der Basiseinheit (101; 201; 301) verbunden ist,
• die Wechseleinheit einen Druckbehälter als Teil der Umkehrosmoseeinrichtung (102; 202; 302) umfasst, und
• der Druckbehälter ein Kopfteil (103b; 203b) umfasst, in das eine Eintrittsöffnung (107; 207) für das salzhaltige Wasser, eine Austrittsöffnung (108; 208) für das Permeat und eine Austrittsöffnung (109; 209; 309) für das Konzentrat integriert sind,
wobei die Umkehrosmoseeinrichtung (102; 202; 302) und die Basiseinheit (101; 201; 301) derart ausgebildet sind, dass
• die Eintrittsöffnung (107; 207) mit dem Einlass (115; 215; 315) für das salzhaltige Wasser gekoppelt ist,
• die Austrittsöffnung (108; 208) für das Permeat mit dem Auslass (116; 216; 316) für das Permeat gekoppelt ist, und
• die Austrittsöffnung (109; 209; 309) für das Konzentrat mit dem Auslass (117; 217; 317) für das Konzentrat gekoppelt ist,
wenn die Umkehrosmoseeinrichtung (102; 202; 302) mit der Basiseinheit (101; 201; 301) verbunden ist,
**dadurch gekennzeichnet, dass**
• die Vorrichtung eine Verschneideeinrichtung (118; 218; 318) umfasst, mit der aus der Umkehrosmoseeinrichtung (102; 202; 302) austretendes Permeat mit dem salzhaltigen Wasser und/oder Konzentrat versetzt werden kann, wobei
• die Verschneideeinrichtung (118; 218; 318) als Ventil ausgebildet ist,
• die Verschneideeinrichtung (118; 218; 318) einen von einer Wand (306a) begrenzten Kanal (308a) und einen Ventilkörper (324), der innerhalb des Kanals (308a) axial verschiebbar und/oder rotativ beweglich gelagert ist, umfasst und
• der Ventilkörper (324) Bestandteil der Basiseinheit (101; 201; 301) und der Kanal (308a) samt der den Kanal (308a) begrenzenden Wand (306a) Bestandteil der Wechseleinheit (102; 202; 302) ist.

2. Vorrichtung nach Anspruch 1, **dadurch gekennzeichnet, dass** die ortsfest installierbare Basiseinheit 101; 201; 301) eine Aufnahme für die Wechseleinheit (102; 202; 302) aufweist, vorzugsweise eine Aufnahme, in die die Wechseleinheit (102; 202; 302) eingeschraubt werden kann.

3. Vorrichtung nach Anspruch 1 oder Anspruch 2, **gekennzeichnet durch** mindestens eines der folgenden Merkmale:
• Der Druckbehälter ist zylindrisch ausgebildet und weist einen Boden (103a; 203a) und ein Kopfteil (103b; 203b) auf.
• Der Boden (103a; 203a) des Druckbehälters ist geschlossen.

4. Vorrichtung nach einem der vorhergehenden Ansprüche, **dadurch gekennzeichnet, dass** die Umkehrosmoseeinrichtung (102; 202; 302) eine Umkehrosmosemembran aufweist, die um ein perforiertes Rohr gewickelt ist, das zum Sammeln und Abführen des Permeats dient, und in Form eines zylindrischen Wickels (104; 204) vorliegt, der zwei stirnseitige Enden und damit eine erste (104a; 204a) und eine zweite Stirnseite (104b; 204b) aufweist.

5. Vorrichtung nach Anspruch 4, **gekennzeichnet durch** mindestens eines der folgenden Merkmale:
• Auf die erste Stirnseite (104a; 204a) der gewickelten Umkehrosmosemembran ist ein Adapter (106; 206; 306) aufgebracht, über den die Umkehrosmosemembran samt dem Permeatsammelrohr mit dem Kopfteil (103b; 203b) des Druckbehälters gekoppelt ist.
• Mittels des Adapters ist die zweite Stirnseite (104b; 204b) der Umkehrosmosemembran mit der Eintrittsöffnung (107; 207) für das Wasser gekoppelt.
• Mittels des Adapters (106; 206; 306) ist das Permeatsammelrohr (105; 205; 305) mit der Austrittsöffnung (108; 208) für das Permeat gekoppelt.
• Mittels des Adapters (106; 206; 306) ist die erste Stirnseite der gewickelten Umkehrosmosemembran mit der Austrittsöffnung (109; 209; 309) für das Konzentrat gekoppelt.

6. Vorrichtung nach einem der vorhergehenden Ansprüche, **gekennzeichnet durch** mindestens eines der folgenden Merkmale:
• Die Wand (306a) des Kanals (308a) weist mindestens eine Durchbrechung (323a; 323b; 323c) auf, durch welche Flüssigkeit, insbesondere das salzhaltige Wasser, in den Kanal (308a) eindringen kann.
• Der Ventilkörper (324) weist einen Dichtungsbereich (327) auf, der in Abhängigkeit der Position des Ventilkörpers (324) den Durchfluss von Flüssigkeit durch die mindestens eine Durchbrechung (323a; 323b; 323c) vollständig oder teilweise sperren kann.

7. Vorrichtung nach Anspruch 6, **gekennzeichnet durch** mindestens eines der folgenden Merkmale:
• Der Kanal (308a) weist einen Eingang auf, der mit dem Permeatsammelrohr (105; 205; 305) gekoppelt ist, sowie einen Ausgang, der mit dem Auslass für das Permeat gekoppelt ist.
• Der Ventilkörper (324) ist hohlzylindrisch ausgebildet und weist einen zentralen Durchgang mit einem Eingang an einem Ende des Ventilkörpers und einem Ausgang am anderen Ende des Ventilkörpers auf.
• Der Ausgang des zentralen Durchgangs ist mit dem in die Basiseinheit (101; 201; 301) integrierten Auslass (117; 217; 317) für das Konzentrat gekoppelt.
• Der Eingang des zentralen Durchgangs ist mit der Austrittsöffnung (109; 209; 309) für das Konzentrat gekoppelt, insbesondere in diese eingeschoben.

8. Vorrichtung nach einem der Ansprüche 6 oder 7, **gekennzeichnet durch** mindestens eines der folgenden Merkmale:
• Die Position des Ventilkörpers (324) innerhalb des Kanals (308a) ist mittels eines Positionierelements (331) einstellbar, welches eine axiale Verschiebung des Ventilkörpers (324) innerhalb des Kanals (308a) bewirkt.
• Das Positionierelement (331) sitzt drehbar auf einem Gewinde (332) auf und erfährt bei einer Drehung eine Verschiebung in axialer Richtung.
• Das Positionierelement (331) ist mit dem Ventilkörper (324) derart gekoppelt, dass eine Verschiebung des Positionierelements (331) in axialer Richtung eine Axialverschiebung des Ventilkörpers (324) bewirkt.
• Das Positionierelement (331) ist als Kappe ausgebildet.

9. Vorrichtung nach einem der Ansprüche 6 oder 7, **gekennzeichnet durch** mindestens eines der folgenden Merkmale:
• Die Position des Ventilkörpers (324) innerhalb des Kanals (308a) ist mittels eines Positionierelements einstellbar, welches eine Rotation des Ventilkörpers (324) innerhalb des Kanals (308a) bewirkt.
• Das Positionierelement ist drehfest mit dem Ventilkörper (324) verbunden.

10. Vorrichtung nach einem der vorhergehenden Ansprüche, **dadurch gekennzeichnet, dass** sie eine Regelvorrichtung (119; 219) zur Steuerung und/oder Regelung einer Durchflussmenge des aus der Umkehrosmoseeinrichtung (102; 202; 302) austretenden Permeats und/oder Konzentrats aufweist.

11. Verfahren zur Aufbereitung von salzhaltigem Wasser mittels Umkehrosmose, **dadurch gekennzeichnet, dass** die Aufbereitung mittels einer Vorrichtung (100; 200; 300) gemäß Anspruch 1 erfolgt.

## Claims

1. Apparatus (100; 200; 300) for treating salt-containing water by means of reverse osmosis, in which the salt-containing water is separated into a permeate stream and a concentrate stream, having the features
• the apparatus comprises an inlet (115; 215; 315) for the salt-containing water,
• the apparatus comprises an outlet (116; 216; 316) for the permeate,
• the apparatus comprises an outlet (117; 217; 317) for the concentrate, and
• the apparatus comprises a reverse osmosis device (102; 202; 302),
and the additional features that
• the inlet and the outlets are integrated into a base unit (101; 201; 301) which is able to be installed in a positionally fixed manner, and
• the reverse osmosis device (102; 202; 302) is provided as an exchangeable unit which is detachably connected to the base unit (101; 201; 301),
• the exchangeable unit comprises a pressure vessel as part of the reverse osmosis device (102; 202; 302), and
• the pressure vessel comprises a top part (103b; 203b) into which an entry opening (107; 207) for the salt-containing water, an exit opening (108; 208) for the permeate and an exit opening (109; 209; 309) for the concentrate are integrated,
wherein the reverse osmosis device (102; 202; 302) and the base unit (101; 201; 301) are configured in such a way that
• the entry opening (107; 207) is coupled to the inlet (115; 215; 315) for the salt-containing water,
• the exit opening (108; 208) for the permeate is coupled to the outlet (116; 216; 316) for the permeate, and
• the exit opening (109; 209; 309) for the concentrate is coupled to the outlet (117; 217; 317) for the concentrate
when the reverse osmosis device (102; 202; 302) is connected to the base unit (101; 201; 301),
**characterized in that**
• the apparatus comprises a blending device (118; 218; 318) by way of which permeate exiting the reverse osmosis device (102; 202; 302) can be mixed with the salt-containing water and/or concentrate, wherein
• the blending device (118; 218; 318) is in the form of a valve,
• the blending device (118; 218; 318) comprises a channel (308a), which is delimited by a wall (306a), and a valve body (324), which is mounted in an axially displaceable and/or rotationally movable manner within the channel (308a), and
• the valve body (324) is a constituent part of the base unit (101; 201; 301), and the channel (308) is, together with the wall (306a) delimiting the channel (308a), a constituent part of the exchangeable unit (102; 202; 302).

2. Apparatus according to Claim 1, **characterized in that** the base unit (101; 201; 301), which is able to be installed in a positionally fixed manner, has a receptacle for the exchangeable unit (102; 202; 302), preferably a receptacle into which the exchangeable unit (102; 202; 302) can be screwed.

3. Apparatus according to Claim 1 or Claim 2, **characterized by** at least one of the following features:
• the pressure vessel is of cylindrical form and has a bottom (103a; 203a) and a top part (103b; 203b),
• the bottom (103a; 203a) of the pressure vessel is closed.

4. Apparatus according to one of the preceding claims, **characterized in that** the reverse osmosis device (102; 202; 302) has a reverse osmosis membrane, which is wound around a perforated tube serving for the collection and removal of the permeate and which is provided in the form of a cylindrical winding (104; 204) having two face-side ends and thus a first (104a; 204a) and a second face side (104b; 204b).

5. Apparatus according to Claim 4, **characterized by** at least one of the following features:
• an adaptor (106; 206; 306) is mounted on the first face side (104a; 204a) of the wound reverse osmosis membrane, via which adaptor the reverse osmosis membrane is, together with the permeate collecting tube, coupled to the top part (103b; 203b) of the pressure vessel,
• by means of the adaptor, the second face side (104b; 204b) of the reverse osmosis membrane is coupled to the entry opening (107; 207) for the water,
• by means of the adaptor (106; 206; 306), the permeate collecting tube (105; 205; 305) is coupled to the exit opening (108; 208) for the permeate,
• by means of the adaptor (106; 206; 306), the first face side of the wound reverse osmosis membrane is coupled to the exit opening (109; 209; 309) for the concentrate.

6. Apparatus according to one of the preceding claims, **characterized by** at least one of the following features:
• the wall (306a) of the channel (308a) has at least one aperture (323a; 323b; 323c) through which liquid, in particular the salt-containing water, can enter the channel (308a),
• the valve body (324) has a sealing region (327) which, in a manner dependent on the position of the valve body (324), can completely or partially block the flow of liquid through the at least one aperture (323a; 323b; 323c).

7. Apparatus according to Claim 6, **characterized by** at least one of the following claims:
• the channel (308) has an inlet which is coupled to the permeate collecting tube (105; 205; 305), and an outlet which is coupled to the outlet for the permeate,
• the valve body (324) is of hollow-cylindrical form and has a central passage with an inlet at one end of the valve body and with an outlet at the other end of the valve body,
• the outlet of the central passage is coupled to the outlet (117; 217; 317), integrated into the base unit (101; 201; 301), for the concentrate,
• the inlet of the central passage is coupled to the exit opening (109; 209; 309) for the concentrate, in particular is inserted into said exit opening.

8. Apparatus according to either of Claims 6 and 7, **characterized by** at least one of the following features:
• the position of the valve body (324) within the channel (308a) is able to be set by means of a positioning element (331) which brings about an axial displacement of the valve body (324) within the channel (308a),
• the positioning element (331) is seated rotatably on a thread (332) and, when rotated, undergoes a displacement in an axial direction,
• the positioning element (331) is coupled to the valve body (324) in such a way that a displacement of the positioning element (331) in an axial direction brings about an axial displacement of the valve body (324),
• the positioning element (331) is in the form of a cap.

9. Apparatus according to either of Claims 6 and 7, **characterized by** at least one of the following features:
• the position of the valve body (324) within the channel (308a) is able to be set by means of a positioning element which brings about a rotation of the valve body (324) within the channel (308a),
• the positioning element is connected in a rotationally conjoint manner to the valve body (324) .

10. Apparatus according to one of the preceding claims, **characterized in that** it has a regulating apparatus (119; 219) for controlling and/or regulating a throughflow rate of the permeate, and/or concentrate, exiting the reverse osmosis device (102; 202; 302).

11. Method for treating salt-containing water by means of reverse osmosis, **characterized in that** the treatment is realized by means of an apparatus (100; 200; 300) according to Claim 1.

## Revendications

1. Dispositif (100 ; 200 ; 300) pour le traitement d'eau salée par osmose inverse, dans lequel l'eau salée est séparée en un courant de perméat et un courant de concentré, présentant les caractéristiques suivantes :
- le dispositif comprend une entrée (115 ; 215 ; 315) pour l'eau salée,
- le dispositif comprend une sortie (116 ; 216 ; 316) pour le perméat,
- le dispositif comprend une sortie (117 ; 217 ; 317) pour le concentré et
- le dispositif comprend un appareil d'osmose inverse (102 ; 202 ; 302),
et les caractéristiques supplémentaires suivantes :
- l'entrée et les sorties sont intégrées dans une unité de base (101 ; 201 ; 301) pouvant être installée de manière fixe et
- l'appareil d'osmose inverse (102 ; 202 ; 302) se présente sous la forme d'une unité remplaçable, qui est reliée de manière détachable à l'unité de base (101 ; 201 ; 301),
- l'unité remplaçable comprend un récipient sous pression faisant partie de l'appareil d'osmose inverse (102 ; 202 ; 302), et
- le récipient sous pression comprend une partie de tête (103b ; 203b), dans laquelle sont intégrées une ouverture d'entrée (107 ; 207) pour l'eau salée, une ouverture de sortie (108 ; 208) pour le perméat et une ouverture de sortie (109 ; 209 ; 309) pour le concentré,
l'appareil d'osmose inverse (102 ; 202 ; 302) et l'unité de base (101 ; 201 ; 301) étant configurés de telle sorte que
- l'ouverture d'entrée (107 ; 207) est couplée à l'entrée (115 ; 215 ; 315) pour l'eau salée,
- l'ouverture de sortie (108 ; 208) pour le perméat est couplée à la sortie (116 ; 216 ; 316) pour le perméat, et
- l'ouverture de sortie (109 ; 209 ; 309) pour le concentré est couplée à la sortie (117 ; 217 ; 317) pour le concentré,
lorsque l'appareil d'osmose inverse (102 ; 202 ; 302) est relié à l'unité de base (101 ; 201 ; 301), **caractérisé en ce que**
- le dispositif comprend un appareil de coupe (118 ; 218 ; 318), avec lequel du perméat sortant de l'appareil d'osmose inverse (102 ; 202 ; 302) peut être mélangé avec l'eau salée et/ou le concentré,
- l'appareil de coupe (118 ; 218 ; 318) étant configuré sous la forme d'une soupape,
- l'appareil de coupe (118 ; 218 ; 318) comprenant un canal (308a) délimité par une paroi (306a) et un corps de soupape (324), qui est monté de manière déplaçable axialement et/ou de manière mobile en rotation à l'intérieur du canal (308a), et
- le corps de soupape (324) faisant partie de l'unité de base (101 ; 201 ; 301) et le canal (308a) ainsi que la paroi (306a) délimitant le canal (308a) faisant partie de l'unité remplaçable (102 ; 202 ; 302) .

2. Dispositif selon la revendication 1, **caractérisé en ce que** l'unité de base (101 ; 201 ; 301) pouvant être installée de manière fixe comprend un logement pour l'unité remplaçable (102 ; 202 ; 302), de préférence un logement dans lequel l'unité remplaçable (102 ; 202 ; 302) peut être vissée.

3. Dispositif selon la revendication 1 ou la revendication 2, **caractérisé par** au moins une des caractéristiques suivantes :
- le récipient sous pression est configuré sous forme cylindrique et comprend un fond (103a ; 203a) et une partie de tête (103b ; 203b),
- le fond (103a ; 203a) du récipient sous pression est fermé.

4. Dispositif selon l'une quelconque des revendications précédentes, **caractérisé en ce que** l'appareil d'osmose inverse (102 ; 202 ; 302) comprend une membrane d'osmose inverse, qui est enroulée autour d'un tube perforé, qui sert à la collecte et au déchargement du perméat, et se présente sous la forme d'un enroulement cylindrique (104 ; 204), qui comprend deux extrémités frontales et par conséquent un premier (104a ; 204a) et un deuxième côté frontal (104b ; 204b) .

5. Dispositif selon la revendication 4, **caractérisé par** au moins une des caractéristiques suivantes :
- un adaptateur (106 ; 206 ; 306) est disposé sur le premier côté frontal (104a ; 204a) de la membrane d'osmose inverse enroulée, par l'intermédiaire duquel la membrane d'osmose inverse ainsi que le tube de collecte de perméat sont couplés à la partie de tête (103b ; 203b) du récipient sous pression,
- au moyen de l'adaptateur, le deuxième côté frontal (104b ; 204b) de la membrane d'osmose inverse est couplé à l'ouverture d'entrée (107 ; 207) pour l'eau,
- au moyen de l'adaptateur (106 ; 206 ; 306), le tube de collecte de perméat (105 ; 205 ; 305) est couplé à l'ouverture de sortie (108 ; 208) pour le perméat,
- au moyen de l'adaptateur (106 ; 206 ; 306), le premier côté frontal de la membrane d'osmose inverse enroulée est couplé à l'ouverture de sortie (109 ; 209 ; 309) pour le concentré.

6. Dispositif selon l'une quelconque des revendications précédentes, **caractérisé par** au moins une des caractéristiques suivantes :
- la paroi (306a) du canal (308a) comprend au moins une ouverture (323a ; 323b ; 323c), à travers laquelle du liquide, en particulier l'eau salée, peut pénétrer dans le canal (308a),
- le corps de soupape (324) comprend une zone d'étanchéité (327) qui, en fonction de la position du corps de soupape (324), peut bloquer complètement ou partiellement le passage de liquide à travers l'au moins une ouverture (323a ; 323b ; 323c).

7. Dispositif selon la revendication 6, **caractérisé par** au moins une des caractéristiques suivantes :
- le canal (308a) comprend une admission, qui est couplée au tube de collecte de perméat (105 ; 205 ; 305), et une évacuation, qui est couplée à la sortie pour le perméat,
- le corps de soupape (324) est configuré sous forme cylindrique creuse et comprend un passage central muni d'une admission à une extrémité du corps de soupape et d'une évacuation à l'autre extrémité du corps de soupape,
- l'évacuation du passage central est couplée à la sortie (117 ; 217 ; 317) pour le concentré intégrée dans l'unité de base (101 ; 201 ; 301),
- l'admission du passage central est couplée à l'ouverture de sortie (109 ; 209 ; 309) pour le concentré, notamment insérée dans celle-ci.

8. Dispositif selon l'une quelconque des revendications 6 ou 7, **caractérisé par** au moins une des caractéristiques suivantes :
- la position du corps de soupape (324) à l'intérieur du canal (308a) peut être ajustée au moyen d'un élément de positionnement (331), qui provoque un déplacement axial du corps de soupape (324) à l'intérieur du canal (308a),
- l'élément de positionnement (331) repose de manière rotative sur un filetage (332) et subit un déplacement dans la direction axiale lors d'une rotation,
- l'élément de positionnement (331) est couplé au corps de soupape (324) de telle sorte qu'un déplacement de l'élément de positionnement (331) dans la direction axiale provoque un déplacement axial du corps de soupape (324),
- l'élément de positionnement (331) est configuré sous la forme d'un capuchon.

9. Dispositif selon l'une quelconque des revendications 6 ou 7, **caractérisé par** au moins une des caractéristiques suivantes :
- la position du corps de soupape (324) à l'intérieur du canal (308a) peut être ajustée au moyen d'un élément de positionnement, qui provoque une rotation du corps de soupape (324) à l'intérieur du canal (308a),
- l'élément de positionnement est relié de manière immobile en rotation au corps de soupape (324).

10. Dispositif selon l'une quelconque des revendications précédentes, **caractérisé en ce qu'**il comprend un dispositif de régulation (119 ; 219) pour la commande et/ou la régulation d'un débit du perméat et/ou du concentré sortant de l'appareil d'osmose inverse (102 ; 202 ; 302).

11. Procédé de traitement d'eau salée par osmose inverse, **caractérisé en ce que** le traitement a lieu au moyen d'un dispositif (100 ; 200 ; 300) selon la revendication 1.
